# EUROPÄISCHE PATENTANMELDUNG

(11) **EP 2 527 069 A1**
(43) Veröffentlichungstag der Anmeldung: **28.11.2012**
(21) Anmeldenummer: 12169181.0
(22) Anmeldetag: 24.05.2012
(51) Int. Cl.: B23D 45/10, B27B 5/34, B27G 19/10

(54) **Beidseits verschwenkbares Vorritzsägeaggregat**

(30) Priorität: 27.05.2011 DE 202011101445 U
(71) Anmelder: Wilhelm Altendorf GmbH & Co. KG, 32429 Minden (DE)
(72) Erfinder: Altendorf, Wilfried, 32429 Minden (DE)
(74) Vertreter: Eisenführ, Speiser & Partner

(57) **Zusammenfassung**

Die Erfindung betrifft ein Vorritzsägeaggregat zum Einbringen einer Vorritznut in Werkstücke, umfassend ein Rahmengestell, welches ausgebildet ist, um an einer Kreissäge befestigt zu werden, ein mit einem Antriebsmotor gekoppeltes erstes Vorritzsägeblatt (80), ein koaxial und benachbart zum ersten Vorritzsägeblatt (80) angeordnetes zweites Vorritzsägeblatt (10), eine Positionseinstellvorrichtung, die ausgebildet ist, um das erste und zweite Vorritzsägeblatt relativ zum Rahmengestell in axialer Richtung der Drehachse der Vorritzsägeblätter (80,10) gemeinsam zu verschieben zum axialen Positionieren der Vorritznut, eine Breiteneinstellvorrichtung, die ausgebildet ist, um das erste und zweite Vorritzsägeblatt (80,10) in axialer Richtung der Drehachse der Vorritzsägeblätter relativ zueinander zu verschieben zum Einstellen der Breite der Vorritznut. Erfindungsgemäß umfasst die Positionseinstellvorrichtung einen Tragarm (160) und einen Positionierungsaktuator, der mechanisch zwischen Tragarm (160) und Rahmengestell gekoppelt ist.

## Beschreibung

Die Erfindung betrifft ein Vorritzsägeaggregat zum Einbringen einer Vorritznut in Werkstücke, umfassend ein Rahmengestell, welches ausgebildet ist, um an einer Kreissäge befestigt zu werden, ein mit einem Antriebsmotor gekoppeltes erstes Vorritzsägeblatt, ein koaxial und benachbart zum ersten Vorritzsägeblatt angeordnetes zweites Vorritzsägeblatt, eine Positionseinstellvorrichtung, die ausgebildet ist, um das erste und zweite Vorritzsägeblatt relativ zum Rahmengestell in axialer Richtung der Drehachse der Vorritzsägeblätter gemeinsam zu verschieben zum axialen Positionieren der Vorritznut, eine Breiteneinstellvorrichtung, die ausgebildet ist, um das erste und zweite Vorritzsägeblatt in axialer Richtung der Drehachse der Vorritzsägeblätter relativ zueinander zu verschieben zum Einstellen der Breite der Vorritznut.

Solche Vorritzsägeaggregate dienen dazu, beim Zuschneiden von plattenförmigen Werkstücken mit einer beidseitigen Beschichtung vor dem eigentlichen Trennschnitt eine Nut in das zu trennende Werkstück zu schneiden, und zwar auf der Seite, auf der beim Trennschnitt die Zähne des Sägeblattes aus der Platte austreten. Durch diese Nut wird verhindert, dass beim Zuschnitt der Werkstücke mit dem Kreissägeblatt funktionelle und optisch störende Ausbrüche auf dieser Seite der Platte auftreten, die sonst durch die austretenden Zähne des Sägeblattes verursacht würden. Um dieses zu erreichen, muss die Nut, die vom Vorritzer geschnitten wird, exakt parallel und fluchtend zum späteren Sägeschnitt ausgerichtet sein und hinsichtlich ihrer Breite exakt der Schnittbreite des Kreissägeblattes entsprechen oder geringfügig breiter sein.

Es ist bekannt, zu diesem Zweck einen Vorritzer zu verwenden, der zwei koaxial auf einer Antriebswelle befestigte Vorritzsägeblätter aufweist, die sich gemeinsam drehen und die Nut oder zwei parallele Nuten fräsen. Die Antriebswelle, auf der die Vorritzsägeblätter befestigt sind, kann axial verschoben werden, um die Position der Vorritznut(en) einzustellen. Der Abstand der beiden Vorritzsägeblätter voneinander kann z.B. mittels einer Stellschraube eingestellt werden, um die Breite der Vorritznut bzw. den Abstand der beiden Vorritznuten einzustellen. Nachteilig an dieser Lösung ist, dass zum Einstellen der Breite der Vorritznut die Rotation der Vorritzsägeblätter unterbrochen werden muss, um die Einstellschraube betätigen zu können. Da die Einstellung der richtigen Vorritznutbreite mittels eines Probeschnitts geprüft wird, ist die Einstellung der Vorritznutbreite, die z.B. nach einem Wechsel des Kreissägeblattes erforderlich wird, ein langwieriger Vorgang, der für den Bediener unhandlich ist und außerdem zu langen Maschinenstillstandzeiten führt.

Um dieser Problematik abzuhelfen wird in EP 0 813 939 B1 ein Vorritzwerkzeug vorgeschlagen, bei dem der Abstand zwischen den beiden Vorritzsägeblättern mittels einer Druckstange verstellt werden kann, die koaxial zu der als Hohlwelle ausgeführten Antriebswelle angeordnet ist und sich mit der Antriebswelle mitdreht. Mit dieser Vorrichtung wird zwar die Möglichkeit bereitgestellt, die Vorritznutbreite einzustellen, ohne dass hierzu die Rotation der Vorritzssägeblätter gestoppt werden müsste, jedoch ist dieses Vorritzsägeaggegat aufgrund des notwendigen Hohlwellenaufbaus und der rotatorischen Kopplung und axialen Entkopplung der inneren Welle zur äußeren Hohlwelle konstruktiv aufwendig, und weist im Kopfbereich eine erhebliche Breite auf, die für eine Verschwenkbarkeit zur Durchführung von Gehrungsschritten nachteilig ist.

In der Gebrauchsmusterschrift DE 20 2006 004 596 U1 wird eine Lösung beschrieben, bei der Breitenverstellung ein von der Rotation der Vorritzsägeblätter entkoppeltes und radial zur Drehachse versetztes, verschieblich geführtes Kraftübertragungselement verwendet wird, das über ein Drehlager mit einem der Vorritzsägeblätter gekoppelt ist, um eine axiale Verschiebung dieses Vorritzsägeblattes relativ zu dem anderen Vorritzsägeblatt zu bewirken. Weiterhin weist diese Einheit eine Höhenverstellung auf, die in der Lage ist, das gesamte Aggregat in kurzen Zeitabständen abzusenken oder anzuheben. Diese Konstruktion weist jedoch ebenfalls eine Baulänge auf, die sich störend bemerkbar machen kann, wenn solche Vorritzaggregate in Maschinen eingebaut werden sollen, die aus einer senkrechten Sägeblattstellung in eine rechtsseitige oder linksseitige Schrägstellung gebrachten werden sollen.

Zwar kann mit diesen vorbekannten Vorritzsägeaggregaten eine Einstellung der Position und Breite der Vorritzsägeblätter durchgeführt werden und zugleich die grundsätzliche Voraussetzung erfüllt werden, dass eine präzise Vorritznut oder -doppelnut hergestellt werden kann. Allerdings wird dieser Vorteil mit dem Nachteil verbunden, dass eine in ihrem Aufbau ausladende Konstruktion als Vorritzsägeaggregat bereitgestellt wird. Diese ausladende Konstruktion resultiert in dem Nachteil, dass bei der Durchführung von Gehrungsschnitten, bei denen das Hauptsägeblatt um einen bestimmten Winkel zur Horizontalen verschwenkt wird und dann mit dem solcherart verschwenkten Hauptsägeblatt der Schnitt durchgeführt wird, entweder mangels des erforderlichen Raums auf eine Verschwenkung des Vorritzsägeaggregats verzichtet und folglich auch auf das Einbringen einer Vorritznut verzichtet werden muss oder aber Gehrungsschnitte mit Vorritznut nur mit sehr kleinen Verschwenkwinkeln ausgeführt werden können, oder spezielle Ausnehmungen am Maschinengestell vorgesehen sein müssen, die dessen Steifigkeit herabsetzen, was sich nachteilig auf die Präzision des Schnittes auswirkt.

Zugleich ist es für die Bedienung einer Kreissägemaschine und des daran angeordneten Vorritzsägeaggregates vorteilhaft, wenn eine Verschwenkung von Hauptsägeblatt und Vorritzsägeblättern synchron erfolgen kann, folglich auch die einmal eingestellte fluchtende Anordnung der Vorritzsägeblätter zum Hauptsägeblatt beibehalten wird und keine Neujustierung für eine Durchführung eines Gehrungsschnittes erforderlich wird. Weiterhin ist es zur Durchführung universeller Gehrungsschnitte wünschenswert, dass die Verschwenkung von Hauptsägeblatt und Vorritzsägeblätter nicht nur um einen kleinen Winkel zu einer Seite verschwenkt werden können, sondern vorzugsweise um einen Winkel von 45° oder mehr als 45° zu beiden Seiten verschwenkt werden können.

Der Erfindung liegt die Aufgabe zugrunde, ein Vorritzsägeaggregat bereitzustellen, welches eine solche Verschwenkung in konstruktiv einfacher Integrationsweise in ein Maschinengestell ermöglicht.

Diese Aufgabe wird erfindungsgemäß gelöst durch ein Vorritzsägeaggregat der eingangs beschriebenen Bauweise, welches sich dadurch auszeichnet, dass die Positionseinstellvorrichtung einen Tragarm und einen Positionierungsaktuator umfasst, der mechanisch zwischen Tragarm und Rahmengestell gekoppelt ist, und die Breiteneinstellvorrichtung einen an dem Tragarm schwenkbar gelagerten Einstellhebel und einen Breiteneinstellaktuator umfasst, der mechanisch zwischen Tragarm und Einstellhebel gekoppelt ist zur Verschwenkung des Einstellhebels gegenüber dem Tragarm, wobei eines der beiden Vorritzsägeblätter zur axialen Positionierung mit dem Tragarm mechanisch gekoppelt ist und das andere der beiden Vorritzsägeblätter zur axialen Positionierung mit dem Einstellhebel mechanisch gekoppelt ist.

Mit dem erfindungsgemäßen Vorritzsägeaggregat wird eine vorteilhaft schlanke Ausgestaltung im Kopfbereich um die Vorritzsägeblätter ermöglicht. Dies wird erreicht, weil auf umfangreiche Linearführungen zur Führung der Verstellbewegungen der beiden Vorritzsägeblätter zueinander und gemeinsam verzichtet werden kann. Stattdessen wird die Verstellung der beiden Vorritzsägeblätter zueinander mittels eines schwenkbar gelagerten Einstellhebels realisiert, der an einem Tragarm gelagert ist und mittels eines Breiteneinstellaktuators, der zwischen Tragarm und Einstellhebel gekoppelt ist, verschwenkt wird. Dabei ist zu verstehen, dass der Breiteneinstellaktuator vorzugsweise solcherart angeordnet ist, dass er ein Ende des Einstellhebels betätigt. Insbesondere kann hierbei eine vorteilhafte Hebelwirkung mit Untersetzung des Aktuatorwegs zur Erzielung einer besonders präzisen Verstellbewegung zwischen den beiden Vorritzsägeblättern erreicht werden.

Die erfindungsgemäße Vorritzeinrichtung zeichnet sich demzufolge vorzugsweise dadurch aus, dass durch den Einstellhebel selbst keine Führungsfunktion für eines der beiden Vorritzsägeblätter oder für beide Vorritzsägeblätter übernommen werden muss. Stattdessen wird eine Funktionstrennung erzielt, indem die zur Verstellung der Breite notwendige Bewegung durch den Einstellhebel realisiert wird, die Führung der beiden Vorritzsägeblätter zueinander aber unabhängig von diesem Einstellhebel erfolgt und keine diesbezügliche Verstellkräfte ausführen muss. Insbesondere ermöglicht dies eine unmittelbar konzentrisch zu den Vorritzsägeblättern angeordnete Führung, beispielsweise indem beide Vorritzsägeblätter auf einer gemeinsamen Achse gelagert sind, was aufgrund der dadurch vollkommen vermiedenen Nachteile durch Versatz von Führung und Vorritzsägeblattdrehachse zu einer zugleich präzisen und sehr Platz sparenden Führung der beiden Vorritzsägeblätter verhilft.

Durch die erfindungsgemäße Ausgestaltung des Vorritzsägeaggregats wird es möglich, dass das erfindungsgemäße Vorritzsägeaggregat auch in besonders steifen Maschinengestellkonstruktionen mit entsprechender massiver oder versteifter Ausgestaltung, Verrippung und Versteifung oder dgl. eingebaut wird und zugleich eine Verschwenkung des Vorritzsägeaggregats für Gehrungsschnitte in einem weiten, beidseitigen Winkelbereich ermöglicht. So ist es ohne Weiteres möglich, mit dem erfindungsgemäß konstruierten Vorritzsägeaggregat beidseitige Gehrungswinkel von 45°, 46° oder mehr einzustellen. Dies erleichtert in erheblicher Weise die Bearbeitung von Werkstücken, die beidseitig beschichtet sind, auf einer Formatkreissäge mit einem solcherart ausgestalteten Vorritzsägeaggregat.

Der Breiteneinstellaktuator und der Positionierungsaktuator können erfindungsgemäß nach verschiedenen Baumustern ausgeführt sein. So kommen insbesondere elektrisch betriebene Aktuatoren infrage, in bestimmten Ausführungen können aber auch hydraulische oder pneumatische oder anders betätigte Stellantriebe eingesetzt werden. Unter den elektrisch betriebenen Aktuatoren kommen elektromotorisch, elektrostatisch, piezoelektrisch oder elektromagnetisch betriebene Aktuatoren in Betracht. Die beiden Aktuatoren können hierbei grundsätzlich verschieden in ihrer Konstruktion ausgeführt sein, bevorzugt ist es aber, dass die Aktuatoren baugleich ausgeführt sind. Diese baugleiche Ausführung wird durch die erfindungsgemäße Ausführung des Vorritzsägeaggregats besonders bevorteilt, da aufgrund der Hebelwirkungen eine konstruktive Anpassung der Hebelwege und hierzu notwendigen Aktuatorwege durch die erfindungsgemäße Vorrichtung ermöglicht wird. Dies eröffnet auch dann, wenn beispielsweise eine Positionierung in einem Verstellbereich realisiert werden muss, der größer oder kleiner als der Breiteneinstellbereich ist, mit übereinstimmend ausgeführten Aktuatoren das erfindungsgemäße Vorritzsägeaggregat auszuführen.

Unter einer mechanischen Kopplung ist im erfindungsgemäßen Sinne im einfachsten Fall eine Anlage der beiden gekoppelten Teile zueinander mit einfachen, geraden oder gekrümmten Anlageflächen zu verstehen. Neben diesen einfachen Ausführungsformen können auch andere Kopplungsweisen, beispielsweise in Form einer Kulissenführung, Achslagerung oder dgl. ausgeführt sein.

Gemäß einer ersten bevorzugten Ausführungsform ist vorgesehen, dass das erste Vorritzsägeblatt drehbar und axial festgesetzt an dem Tragarm gelagert ist und das zweite Sägeblatt drehbar und axial festgesetzt an einer Achseinheit gelagert ist, die axial verschieblich zu dem Tragarm ist und mechanisch mit dem Einstellhebel gekoppelt ist. Mit dieser Ausgestaltung wird eine mechanisch robuste und zugleich kompakt im Kopfbereich um die Vorritzsägeblätter bauende Ausgestaltung vorgeschlagen. Hierbei stellt eines der beiden Vorritzsägeblätter eine Festlagerung am Tragarm dar und wird zur Positionsverstellung gemeinsam mit dem Tragarm und dem zweiten Vorritzsägeblatt positioniert. Dieses erste Sägeblatt kann folglich insbesondere auf einer mit dem Tragarm verbundenen Achse gelagert sein. Das andere, zweite Vorritzsägeblatt ist hingegen beweglich in Bezug auf den Tragarm geführt und kann mittels des Einstellhebels relativ zu dem ersten Vorritzsägeblatt axial verschoben werden, um eine Einstellung der Breite der Vorritznut vorzunehmen.

Grundsätzlich ist zu verstehen, dass die Breite der Vorritznut als axialer Abstand der jeweils außen liegenden Schneidkanten der beiden Vorritzsägeblätter definiert ist. Dabei kann bei sehr schmalen Vorritznuten eine tatsächlich einzige Vorritznut realisiert werden, bei breiten Vorritznuten können hingegen zwei einzelne Vorritznuten realisiert werden, nämlich durch jedes Vorritzsägeblatt eine einzelne, die durch ihren Abstand zueinander die Breite des Kreissägeblatts umfassen und ein splitterfreies Austreten der Zähne des Hauptsägeblatts auf dieser Seite ermöglichen. Dabei ist es für die Schnittqualität unerheblich, dass in der Mitte zwischen den so ausgeführten beiden Vorritznuten noch Beschichtungsmaterial stehen bleibt, da dies keine Beeinträchtigung der Schnittqualität verursacht.

Gemäß einer weiteren bevorzugten Ausführungsform ist vorgesehen, dass das erste Vorritzsägeblatt drehbar und axial festgesetzt an dem Tragarm gelagert ist und das zweite Sägeblatt mittels zumindest einer Feder axial vorgespannt zu dem ersten Vorritzsägeblatt beabstandet mit einem Aufnahmeflansch verbunden ist, der auf einer Achseinheit drehbar gelagert ist, die mit dem Einstellhebel mechanisch gekoppelt ist. Mit dieser Ausführungsform wird eine einseitige Anlage in der mechanischen Kopplung zwischen Einstellhebel und zweitem Sägeblatt in vereinfachter Weise ermöglicht, indem eine Anlage zwischen Einstellhebel und einem Übertragungselement zwischen zweitem Sägeblatt und Einstellhebel durch eine Federvorspannung ermöglicht wird. Dabei kann es sich insbesondere um eine Druckfeder handeln, die eine Druckfedervorspannung bewirkt und weiter vorzugsweise können mehrere auf einem konzentrischen Kreis um die Drehachse der Vorritzsägeblätter angeordnete Druckfedern vorgesehen sein, die unmittelbar in den Aufnahmen der Vorritzsägeblätter gehalten sind und eine Druckkraft zwischen den beiden Vorritzsägeblättern bewirken, welche die Vorritzsägeblätter auf die eingestellte Breite auseinanderdrücken. Hierdurch wird eine besonders vorteilhafte unmittelbare Krafteinwirkung im Bereich der Vorritzsägeblätter realisiert.

Noch weiter ist es bevorzugt, dass das erste Vorritzsägeblatt mit einem Aufnahmeflansch verbunden ist, der mittels eines Transmissionsriemens mit dem Antriebsmotor verbunden ist. Mit dieser Ausführungsform wird ein einseitiger Antrieb realisiert, bei dem nur eines der beiden Vorritzsägeblätter direkt mit einem Antriebsmotor zur Übertragung von Drehmoment verbunden ist. Das zweite Vorritzsägeblatt kann in diesem Fall indirekt solcherart angetrieben sein, dass es mit dem ersten Vorritzsägeblatt mechanisch gekoppelt ist, beispielsweise mittels exzentrisch zur Drehachse angeordneten Stiften, die formschlüssig in entsprechenden Öffnungen in den Vorritzsägeblättern oder Aufnahmeflanschen für die Vorritzsägeblätter eingreifen. Diese Kombination aus direktem und indirektem Antrieb der beiden Vorritzsägeblätter vereinfacht die Konstruktion im Kopfbereich des Vorritzsägeblatts weiter und ermöglicht weiter eine schlanke Konstruktion in diesem Bereich.

Noch weiter ist es bevorzugt, dass der Antriebsmotor ein Scheibenläufermotor ist und der Transmissionsriemen den Außenumfang des Scheibenläufermotors oder eine auf der Motorwelle angebrachte Riemenscheibe teilweise umschließt. Die Ausführung mit einem Scheibenläufermotor und unmittelbar auf dessen Außenumfang laufenden Treibriemen ermöglicht eine weitere Verschlankung der Bauweise des gesamten Vorritzsägeaggregats, da keine Integration eines Elektromotors mit Abtriebswelle und einer hieraus resultierenden Baubreite erforderlich ist. Ein Scheibenläufermotor zeichnet sich dabei dadurch aus, dass er bei feststehender Achse eine diese Achse umschließende Hohlwelle antreibt, welche Drehzahl und Drehmoment des Motors auf ihrem Außenumfang übertragen kann. Als Transmissionsriemen kommen hierbei insbesondere Keilriemen oder Mehrfachkeilrippenriemen infrage, die in der Lage sind, bei hohen Riemengeschwindigkeiten zugleich hohe Drehmomente zu übertragen und hierbei wenig anfällig gegen den im Betrieb auftretenden Staub, insbesondere Sägespäne, sind.

Noch weiter ist es bevorzugt, dass der Einstellhebel an einem Lagerungspunkt an dem Tragarm schwenkbar gelagert ist, der zwischen der Drehachse der Vorritzsägeblätter und dem mechanischen Kopplungspunkt zwischen Breiteneinstellaktuator und Einstellhebel angeordnet ist. Grundsätzlich sind Hebelanordnungen erfindungsgemäß realisierbar, bei denen Aktuatorangriffspunkt und Kraftkopplungspunkt zum Vorritzsägeblatt bzw. einem Kupplungselement hierzu auf einer Seite der Hebelschwenklagerung liegen. Die in Bezug auf den Schwenklagerungspunkt gegenüberliegende Anordnung von Aktuatorangriffspunkt und Kraftkopplungspunkt des Vorritzsägeblatts ermöglicht jedoch eine einerseits kompakte Bauweise, andererseits kann durch eine solche Anordnung in einfacher Weise eine Hebelübersetzung der Aktuatorbewegungen realisiert werden.

Noch weiter ist es bevorzugt, dass eines der beiden Vorritzsägeblätter direkt mit dem Antriebsmotor mechanisch gekoppelt ist und das andere der beiden Vorritzsägeblätter zum indirekten Antrieb mechanisch mit dem einen Vorritzsägeblatt gekoppelt ist. Diese Ausgestaltung ermöglicht eine einfache Kraftübertragung auf beide Vorritzsägeblätter bei zugleich kompakter Gestaltung im Bereich der Vorritzsägeblätter und erübrigt insbesondere spezifische Kraftkopplungsmittel zwischen dem Antriebsmotor und jeweils beiden Vorritzsägeblättern.

Gemäß einer weiteren bevorzugten Ausführungsform ist vorgesehen, dass das Rahmengestell einen Hauptrahmenteil und ein Maschinenrahmenteil umfasst, der Hauptrahmenteil mittels eines Höheneinstellaktuators mit dem Maschinenrahmen gekoppelt ist und der Maschinenrahmenteil zur Befestigung an der Kreissäge ausgebildet ist. Grundsätzlich ist zu verstehen, dass der Hauptrahmenteil dazu dient, um das Vorritzsägeaggregat in dem Maschinengestell einer Formatkreissäge oder Plattensäge zu befestigen. Dabei kann das Vorritzsägeaggregat mittels des Hauptrahmenteils an einem Sägewagen befestigt werden, der wiederum translatorisch beweglich innerhalb des Maschinengestells einer Plattensäge gelagert ist, andererseits auch unmittelbar am Maschinengestell einer Formatkreissäge befestigt werden, ohne dass eine solche translatorische Beweglichkeit besteht. Bei dieser Ausführungsform ist das Rahmengestell in zwei Rahmenteile unterteilt, die zueinander in vertikaler Richtung beweglich sind. Diese vertikale Beweglichkeit ermöglicht es einerseits, die Tiefe der Vorritznut einzustellen, gegebenenfalls auch Vorritzsägeblätter unterschiedlichen Durchmessers zu verwenden und eine Justierung diesbezüglich vorzunehmen. Zudem kann durch einen solchen Höheneinstellaktuator eine Sicherheitsfunktion ausgeübt werden, indem die Vorritzsägeblätter grundsätzlich abgesenkt unterhalb der Werkstückauflage angeordnet sind und nur zum Zwecke der Einbringung einer Vorritznut auf eine vorbestimmte Höhe über diese Werkstückauflage angehoben werden. Weiterhin kann eine solche Höhenverstellbarkeit dazu benutzt werden, um Sicherheitsabsenkungen durchzuführen, beispielsweise in steuerungstechnischer Zusammenwirkung mit Handerkennungssensoren im Bereich des Vorritzsägeblatts oder dgl., um hierdurch die Verletzungsgefahr zu verringern.

Noch weiter ist es bevorzugt, wenn der Breiteneinstellaktuator und/oder der Positionierungsaktuator ein Elektromotor, ein elektrischer Schrittmotor, oder ein Piezoaktuator ist. Insbesondere die erfindungsgemäße Übertragung der Vorritznutbreite mittels eines Hebels und die hierdurch gegebene Möglichkeit, eine Hebelübersetzung oder -untersetzung vorzusehen, eröffnet vorteilhafte Möglichkeiten hinsichtlich der Ausgestaltung der verwendeten Aktuatoren. So kann beispielsweise mittels eines Piezoaktuators und einer entsprechenden Übersetzung eine besonders zuverlässige und genaue Breiteneinstellung erfolgen, weiterhin kann durch Einsatz eines Elektromotors und einer Untersetzung eine ausreichend präzise und zugleich kostengünstige Einstellung erfolgen, ohne dass hierfür mechanisch aufwändige Teile, wie Untersetzungsgetriebe, beispielsweise Schneckengetriebe oder dgl., erforderlich wären.

Noch weiter ist es bevorzugt, dass an dem Tragarm eine Achse befestigt ist und das erste und zweite Vorritzsägeblatt drehbar auf der Achse gelagert sind. Durch diese Ausgestaltung wird eine steife und zugleich kompakt bauende Lagerung der beiden Vorritzsägeblätter erzielt, mit der es möglich wird, das gesamte Vorritzsägeaggregat im Kopfbereich um die Vorritzsägeblätter besonders schmal auszuführen. Zugleich kann eine solche Achse auch dazu dienen, um eines der beiden Vorritzsägeblätter translatorisch darauf verschieblich zu lagern. Hierdurch wird neben der kompakten und steifen Ausführung der Drehlagerung auch eine ebenso kompakte und steife Linearlagerung eines Vorritzsägeblatts auf der feststehenden Achse realisiert, wodurch die Funktionalität der Vorritznutbreiteneinstellung in mechanisch zuverlässiger Weise realisiert wird.

Dabei ist es insbesondere bevorzugt, wenn die Achse als Hohlachse ausgebildet ist und eines der beiden Vorritzsägeblätter axial festgesetzt auf der Hohlachse drehbar gelagert ist, in der Hohlachse eine Innenachse axial verschieblich gelagert ist, und das andere der beiden Vorritzsägeblätter axial festgesetzt an der Innenachse drehbar gelagert ist. Durch eine solche Ausgestaltung wird einerseits durch Verwendung einer Hohlachse und einer Innenachse, die beide nicht rotierend ausgeführt sind, ein steifer und mechanisch zuverlässiger Aufbau verwirklicht. Zugleich wird durch die Führung der Innenachse in der Hohlachse eine lineare Führung über eine maximale Stützlänge realisiert, um hierdurch die beiden Vorritzsägeblätter in besonders steifer Weise zueinander zu positionieren.

Dabei ist es besonders bevorzugt, dass die Innenachse mechanisch mit dem Einstellhebel gekoppelt ist. Diese Kopplung ermöglicht eine unmittelbare Betätigung der Innenachse für eine axiale Verstellung gegenüber der Hohlachse, um auf diese Weise eine Breiteneinstellung der Vorritznut umzusetzen. Dabei ist zu verstehen, dass die Innenachse direkt oder mittels daran befestigter Kopplungselemente mit dem Einstellhebel mechanisch gekoppelt sein kann und insbesondere ist es bevorzugt, dass Vorspannkräfte, wie zuvor beschrieben, über die Innenachse auf den Einstellhebel übertragen werden und auf diese Weise eine einfache mechanische Kopplung in Form einer einseitigen Anlage zwischen Einstellhebel und Innenachse bzw. Kopplungselement ermöglicht wird. Gemäß einer weiteren bevorzugten Ausführungsform ist vorgesehen, dass der Einstellhebel an seinem ersten Ende in Druckkontakt mit dem Einstellaktuator und an seinem gegenüberliegenden zweiten Ende in Druckkontakt mit einem der beiden Vorritzsägeblätter steht und dass die Druckkontakte durch elastische Vorspannung in Kontakt gehalten werden, vorzugsweise mittels elastischer Druckvorspannung zwischen den beiden Vorritzsägeblättern. Der Druckkontakt kann dabei insbesondere mittels Zwischenelementen übertragen werden. Diese Ausgestaltung vermeidet die Notwendigkeit aufwändiger Kopplungsmittel im Bereich der mechanischen Kopplung zwischen Einstellhebel und Vorritzsägeblatt, indem eine einseitige Anlage ermöglicht und durch eine Federvorspannung erhalten wird.

Schließlich wird das erfindungsgemäße Vorritzsägeaggregat fortgebildet durch eine Steuerungsvorrichtung, welche signaltechnisch mit der Antriebsvorrichtung gekoppelt und ausgebildet ist, um ein die Schnittgeschwindigkeit eines Hauptsägeblatts charakterisierendes Signal zu erhalten und die Antriebsvorrichtung so anzusteuern, dass die Vorritzsägeblätter etwa die gleiche Schnittgeschwindigkeit haben. Diese Ausführungsform ermöglicht es einerseits, dass auch die Schnittgeschwindigkeit der Vorritzsägeblätter an werkstückbezogene Eigenschaften angepasst wird, darüber hinaus wird es ermöglicht, dass diese Schnittgeschwindigkeit in zuverlässiger Weise durch den Benutzer eingestellt wird, indem sie an die Schnittgeschwindigkeit des Hauptsägeblattes steuerungstechnisch abhängig und angepasst eingestellt wird.

Ein weiterer Aspekt der Erfindung ist eine Formatkreissäge oder eine Plattenkreissäge mit einem Vorritzsägeaggregat der zuvor beschriebenen Weise. Eine solche Formatkreissäge weist den Vorteil auf, dass sie einerseits auch im Bereich des Vorritzsägeaggregats eine steife Maschinenkonstruktion mit entsprechenden Materialstärken und Versteifungsrippen zulässt, zugleich aber eine Verschwenkung des Vorritzsägeaggregats in einem großen Winkelbereich, beispielsweise um mehr als 45° in beiden Richtungen zulässt, um auf diese Weise Gehrungsschnitte auszuführen.

Die Formatkreissäge oder Plattenkreissäge kann dabei fortgebildet werden, indem das Vorritzsägeaggregat in einem Maschinengestell der Formatkreissäge bzw. Plattenkreissäge vorzugsweise vertikal verschieblich gelagert ist, zu einer ersten Seite solcherart verschwenkbar ist, dass die Drehachse des Vorritzsägeaggregat aus einer Lage, in der sie parallel zu einer Werkstückauflagefläche verläuft in eine um einen Winkel von zumindest 45° gegenüber der Werkstückauflage verschwenkte Lage kommt und vorzugsweise vertikal verschieblich gelagert ist, und/oder zu einer der ersten Seite gegenüberliegenden zweiten Seite solcherart verschwenkbar ist, dass die Drehachse des Vorritzsägeaggregat aus einer Lage, in der sie parallel zu einer Werkstückauflagefläche verläuft in eine um einen Winkel von zumindest -45° gegenüber der Werkstückauflage verschwenkte Lage kommt. Gemäß dieser Ausführungsform ist das Vorritzsägeaggregat innerhalb der Kreissäge sowohl vertikal verschieblich, um hierdurch die zuvor erläuterten Sicherheitsfunktionen und Einstellfunktionen zu realisieren, darüber hinaus kann durch beidseitige Verschwenkung eine komfortable Durchführung von Gehrungsschnitten mit dem Vorritzsägeaggregat verwirklicht werden. Weiterhin kann bevorzugt vorgesehen sein, dass das Vorritzsägeaggregat auch horizontal verschieblich in der Plattensäge gelagert und angetrieben ist.

Eine bevorzugte Ausführungsform der Erfindung wird anhand der beiliegenden Figuren erläutert. Es zeigen:
- Fig. 1: eine Seitenansicht eines erfindungsgemäßen Vorritzsägeaggregats;

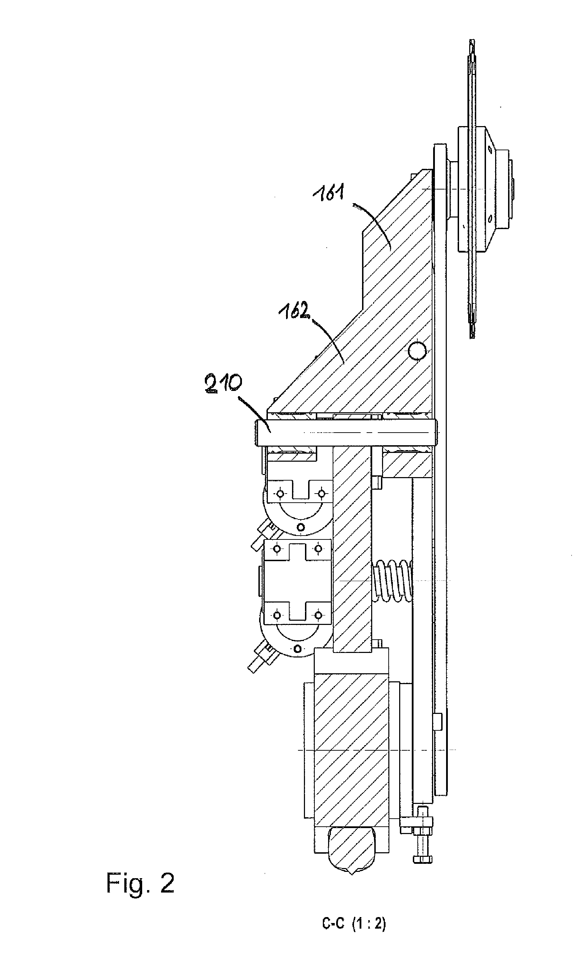

- Fig. 2: eine geschnittene Frontansicht entlang der mit C-C gekennzeichneten Linie in Fig. 1,
- Fig. 3: eine längsgeschnittene Rückansicht entlang der mit A-A in Fig. 1 gekennzeichneten Linie, und
- Fig. 4: eine vergrößerte Ansicht des mit B gekennzeichneten Details aus Fig. 3.

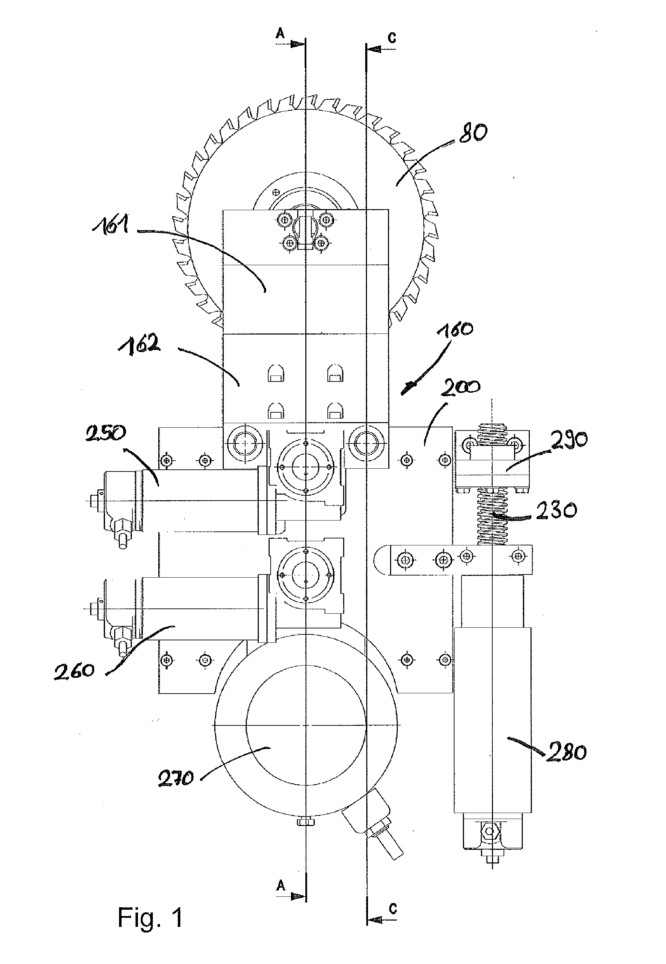

Bezug nehmend zunächst auf Fig. 1 umfasst ein Vorritzsägeaggregat gemäß der Erfindung ein Vorritzsägeblatt 80, welches mittels eines Antriebsmotors 270 in Rotation versetzt ist. Das Vorritzsägeblatt 80 ist drehbar an einem Tragarm 160 gelagert.

Der Tragarm 160 umfasst einen oberen schmalen Abschnitt 161, der sich nach unten hin in einen breiteren Abschnitt 162 vergrößert. Im Bereich dieses verbreiterten Abschnitts 162 ist ein Breitenaktuator 250 befestigt, der als Schrittmotor ausgeführt ist und eine Spindel 251 aufweist, die sich parallel zur Drehachse 1 der Vorritzsägeblätter erstreckt.

Die Spindel 251 steht in mechanischem Kontakt zu einem Einstellhebel 150, der an einer Einstellhebelachse 151 schwenkbar an dem Haltearm 160 befestigt ist. Die Einstellhebelachse 151 liegt zwischen den Kontaktpunkten des Einstellhebels zu der Spindel 251 des Breitenaktuators 250 und einem Kontaktpunkt 153 des Einstellhebels zu einem Übertragungselement 61.

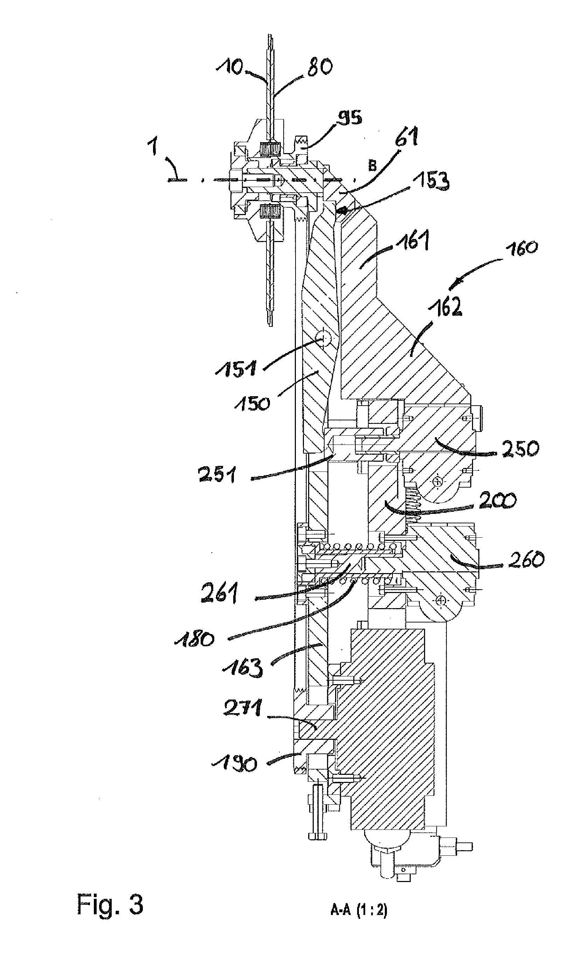

Der Haltearm 160 erstreckt sich weiterhin mit einer an dem Breitenaktuator 250 nach unten vorbeireichenden Strebe 163 bis auf die Höhe des am tiefsten Punktes des Vorritzsägeaggregats liegenden Antriebsmotors 270. Der Antriebsmotor 270 ist, wie insbesondere aus Fig. 3 erkennbar, an dieser Strebe 163 befestigt. Der Antriebsmotor selbst liegt auf einer Seite dieser Strebe 163, die Antriebsachse 271 des Antriebsmotors erstreckt sich durch eine Öffnung in dieser Strebe 163. Auf diese Antriebsachse ist eine Keilrippenriemenscheibe 190 drehmomentfest aufgesetzt. Von dieser Keilrippenriemenscheibe 190 erstreckt sich ein Keilrippenriemen 170 vertikal aufwärts und überträgt Drehzahl und Drehmoment auf eine Keilrippenriemenscheibe 95, die drehmomentfest mit dem ersten Kreissägeblatt 80 verbunden ist.

Zwischen dem Breitenaktuator 250 und dem Antriebsmotor 270 ist ein Positionsaktuator 260 angeordnet. Der Positionsaktuator 260 ist im Wesentlichen baugleich mit dem Breitenaktuator 250 und weist ebenfalls eine Spindel 261 auf, die sich in einer Richtung parallel zu derjenigen der Spindel 251 bewegen kann.

Das Ende der Spindel 261 ist an der Strebe 163 des Haltearms befestigt. Der Positionsaktuator selbst ist an einer Rahmengrundplatte 200 befestigt. Um die Spindel herum ist eine Druckfeder 180 angeordnet, welche das Flankenspiel der Spindel 261 ausgleicht und eine Druckkraft zwischen dem Positionsaktuator 260 und dem Tragarm 160 bewirkt.

Durch diesen Anschluss des Positionsaktuators 260 an der Rahmengrundplatte 200 und der Anschluss der Spindel 261 an dem Tragarm 160 ist es möglich, den gesamten Tragarm entlang der Drehachse 1 der Vorritzsägeblätter zu verschieben. Hierdurch kann die Position der Vorritzsägeblätter 80, 10 in Richtung ihrer Drehachse eingestellt werden.

Die Rahmengrundplatte 200 ist an einem Höhenverstellaktuator 280 befestigt, der eine Spindel 230 aufweist, die in einer Maschinengestellanschlussplatte 290 gelagert ist. Auf diese Weise ist es möglich, die gesamte Rahmengrundplatte 200 in Bezug auf ihren Befestigungspunkt an dem Maschinengestell der Kreissäge, der durch die Maschinengestellanschlussplatte 290 realisiert wird, in ihrer Höhe zu verstellen. Diese Höhenverstellung dient dazu, um die Tiefe der Vorritznut einzustellen, um gegebenenfalls unterschiedliche Durchmesser von Vorritzsägeblättern auszugleichen und um eine Absenkung der Vorritzsägeblätter unter die Werkstückauflagefläche durchzuführen.

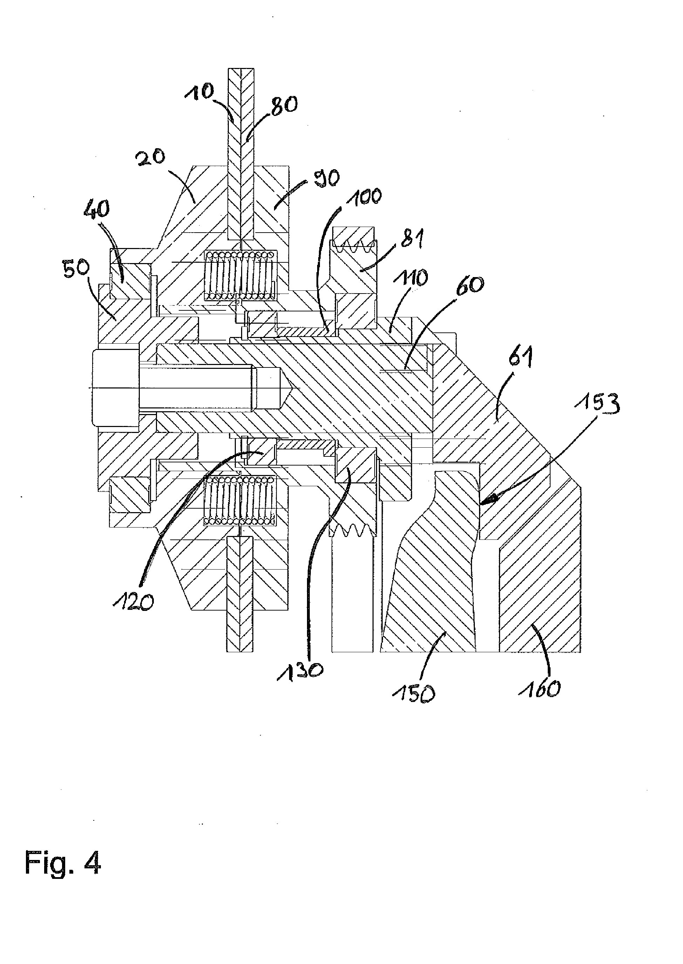

Bezug nehmend auf Fig. 4 ist der Bereich der Vorritzsägeblätter und deren Lagerung in größerem Detail dargestellt. Wie erkennbar ist, wirkt das obere Ende des Verstellhebels 150 mit einem flächigen Kontakt auf ein Kopplungselement 61. Das Kopplungselement 61 ist mit einer Innenachse 60 verbunden, die wiederum mit einem Lageraufnahmeelement 50 verbunden ist, das an der Außenseite gegenüberliegend zum Kopplungselement 61 angeordnet ist.

Die Innenachse 60 ist verschieblich in einer Hohlachse 110 angeordnet. Die Hohlachse 110 wiederum ist fest mit dem Tragarm 160 verbunden. Auf der Hohlachse 110 ist mittels eines rechten Rillenkugellagers 130 der Flansch für das erste Sägeblatt 80 drehbar gelagert. An diesem Flansch 80 ist die obere Keilrippenriemenscheibe 81 einstückig ausgeformt und über diesen Flansch wird Drehzahl und Drehmoment auf das erste Vorritzsägeblatt 80 übertragen. Das erste Vorritzsägeblatt 80 ist weiterhin nach innen liegend mit einem zweiten Rillenkugellager 120 drehbar gelagert, welches sich ebenfalls zwischen dem Flansch 90 und der Hohlachse 110 befindet. Das Rillenkugellager 130 ist sowohl am Innen- wie auch am Außenring als Festlager montiert. Zwischen den Innenringen dieser beiden Rillenkugellager 120, 130 ist eine Distanzhülse 100 angeordnet, welche diese Rillenkugellager auf der Seite ihrer Innenringe auf der Hohlachse 110 beabstandet hält. Das Rillenkugellager 120 ist am Außenring als Loslager ausgeführt und kann somit montagebedingte Toleranzen und thermisch bedingte Dehnungen ausgleichen.

An dem Lageraufnahmeelement 50 ist ein zweiter Flansch 20 für das zweite Vorritzsägeblatt 10 drehbar mittels eines Rillenkugellagers 40 gelagert. In diesem zweiten Flansch 20 sind ebenso wie im ersten Flansch 90 mehrere entlang eines konzentrischen Kreises um die Drehachse 1 der Vorritzsägeblätter verteilte Sacklochbohrungen angeordnet, Die Sacklochbohrungen des Flansches 90 und des Flansches 20 liegen fluchtend zueinander und einander zugewandt. In den Sacklochbohrungen sind jeweils Druckfedern 30 angeordnet. Diese Druckfedern 30 bewirken eine Druckkraft, welche den ersten Flansch 90 und den zweiten Flansch 20 auseinanderdrücken. Diese Druckkraft bewirkt demzufolge, dass das am ersten Flansch 90 befestigte Vorritzsägeblatt 80 und das am zweiten Flansch 20 befestigte zweite Vorritzsägeblatt 10 in axialer Richtung auseinandergedrückt werden.

Die mechanische Kopplung zwischen dem Einstellhebel 150 und dem Kopplungselement 61 ist so ausgebildet, dass sie gegen diese Druckkraft wirken kann und durch Verschwenken des Einstellhebels über den Einstellaktuator 250 die Vorritzsägeblätter gegen die Kraft der Druckfedern 30 zusammenführen kann. In Fig. 4 ist eine solcherart maximal zusammengeführte Position der beiden Vorritzsägeblätter 10, 80 gezeigt, welche die minimale Breite einer Vorritznut definiert.

Zwischen dem ersten Flansch 90 und dem zweiten Flansch 20 sorgen insgesamt vier Druckfedern 30, die in einem Winkel von 90° zueinander jeweils beabstandet sind, für eine die Vorritzsägeblätter 10, 80 auseinanderdrängende Druckkraft. Jeweils zwischen diesen Druckfedern 30 sind auf entsprechend um 45° versetzten Winkelpositionen Bolzen (nicht dargestellt) in entsprechenden Passbohrungen in dem ersten und zweiten Flansch angeordnet. über diese Bolzen wird die Drehzahl und das Drehmoment von dem ersten Flansch 90 auf den zweiten Flansch 20 und demzufolge weiter auf das zweite Vorritzsägeblatt 10 übertragen.

## Patentansprüche

1. Vorritzsägeaggregat zum Einbringen einer Vorritznut in Werkstücke, umfassend,
- Ein Rahmengestell, welches ausgebildet ist, um an einer Kreissäge befestigt zu werden,
- Ein mit einem Antriebsmotor gekoppeltes erstes Vorritzsägeblatt,
- Ein koaxial und benachbart zum ersten Vorritzsägeblatt angeordnetes zweites Vorritzsägeblatt,
- Eine Positionseinstellvorrichtung, die ausgebildet ist, um das erste und zweite Vorritzsägeblatt relativ zum Rahmengestell in axialer Richtung der Drehachse der Vorritzsägeblätter gemeinsam zu verschieben zum axialen Positionieren der Vorritznut,
- Eine Breiteneinstellvorrichtung, die ausgebildet ist, um das erste und zweite Vorritzsägeblatt in axialer Richtung der Drehachse der Vorritzsägeblätter relativ zueinander zu verschieben zum Einstellen der Breite der Vorritznut,
**dadurch gekennzeichnet, dass**
- die Positionseinstellvorrichtung einen Tragarm und einen Positionierungsaktuator umfasst, der mechanisch zwischen Tragarm und Rahmengestell gekoppelt ist, und
- die Breiteneinstellvorrichtung einen an dem Tragarm schwenkbar gelagerten Einstellhebel und einen Breiteneinstellaktuator umfasst, der mechanisch zwischen Tragarm und Einstellhebel gekoppelt ist zur Verschwenkung des Einstellhebels gegenüber dem Tragarm,
- wobei eines der beiden Vorritzsägeblätter zur axialen Positionierung mit dem Tragarm mechanisch gekoppelt ist und das andere der beiden Vorritzsägeblätter zur axialen Positionierung mit dem Einstellhebel mechanisch gekoppelt ist.

2. Vorritzsägeaggregat nach Anspruch 1,
**dadurch gekennzeichnet, dass** das erste Vorritzsägeblatt drehbar und axial festgesetzt an dem Tragarm gelagert ist und das zweite Sägeblatt drehbar und axial festgesetzt an einer Achseinheit gelagert ist, die axial verschieblich zu dem Tragarm ist und mechanisch mit dem Einstellhebel gekoppelt ist.

3. Vorritzsägeaggregat nach Anspruch 1 oder 2,
**dadurch gekennzeichnet, dass**
- das erste Vorritzsägeblatt drehbar und axial festgesetzt an dem Tragarm gelagert ist und
- das zweite Sägeblatt mittels zumindest einer Feder axial vorgespannt zu dem ersten Vorritzsägeblatt beabstandet mit einem Aufnahmeflansch verbunden ist, der auf einer Achseinheit drehbar gelagert ist, die mit dem Einstellhebel mechanisch gekoppelt ist.

4. Vorritzsägeaggregat nach einem der vorhergehenden Ansprüche,
**dadurch gekennzeichnet, dass** das erste Vorritzsägeblatt mit einem Aufnahmeflansch verbunden ist, der mittels eines Transmissionsriemens mit dem Antriebsmotor verbunden ist.

5. Vorritzsägeaggregat nach dem vorhergehenden Anspruch,
**dadurch gekennzeichnet, dass** der Antriebsmotor ein Scheibenläufermotor ist und der Transmissionsriemen den Außenumfang des Scheibenläufermotors oder eine auf der Motorwelle angebrachte Riemenscheibe teilweise umschließt.

6. Vorritzsägeaggregat nach einem der vorhergehenden Ansprüche,
**dadurch gekennzeichnet, dass** der Einstellhebel an einem Lagerungspunkt an dem Tragarm schwenkbar gelagert ist, der zwischen der Drehachse der Vorritzsägeblätter und dem mechanischen Kopplungspunkt zwischen Breiteneinstellaktuator und Einstellhebel angeordnet ist.

7. Vorritzsägeaggregat nach einem der vorhergehenden Ansprüche,
**dadurch gekennzeichnet, dass** eines der beiden Vorritzsägeblätter direkt mit dem Antriebsmotor mechanisch gekoppelt ist und das andere der beiden Vorritzsägeblätter zum indirekten Antrieb mechanisch mit dem einen Vorritzsägeblatt gekoppelt ist.

8. Vorritzsägeaggregat nach einem der vorhergehenden Ansprüche,
**dadurch gekennzeichnet, dass** das Rahmengestell einen Hauptrahmenteil und ein Maschinenrahmenteil umfasst, der Hauptrahmenteil mittels eines Höheneinstellaktuators mit dem Maschinenrahmen gekoppelt ist und der Maschinenrahmen zur Befestigung an der Kreissäge ausgebildet ist.

9. Vorritzsägeaggregat nach einem der vorhergehenden Ansprüche,
**dadurch gekennzeichnet, dass** der Breiteneinstellaktuator und/oder der Positionierungsaktuator
- ein Elektromotor,
- ein elektrischer Schrittmotor, oder
- ein Piezoaktuator
ist.

10. Vorritzsägeaggregat nach einem der vorhergehenden Ansprüche,
**dadurch gekennzeichnet, dass** an dem Tragarm eine Achse befestigt ist und das erste und zweite Vorritzsägeblatt drehbar auf der Achse gelagert sind.

11. Vorritzsägeaggregat nach dem vorhergehenden Anspruch,
**dadurch gekennzeichnet, dass**
- die Achse als Hohlachse ausgebildet ist und eines der beiden Vorritzsägeblätter axial festgesetzt auf der Hohlachse drehbar gelagert ist,
- in der Hohlachse eine Innenachse axial verschieblich gelagert ist, und
- das andere der beiden Vorritzsägeblätter axial festgesetzt an der Innenachse drehbar gelagert ist.

12. Vorritzsägeaggregat nach dem vorhergehenden Anspruch,
**dadurch gekennzeichnet, dass** die Innenachse mechanisch mit dem Einstellhebel gekoppelt ist.

13. Vorritzsägeaggregat nach einem der vorhergehenden Ansprüche,
**dadurch gekennzeichnet, dass** der Einstellhebel an seinem ersten Ende in Druckkontakt mit dem Einstellaktuator und an seinem gegenüberliegenden zweiten Ende in Druckkontakt mit einem der beiden Vorritzsägeblätter steht und dass die Druckkontakte durch elastische Vorspannung in Kontakt gehalten werden, vorzugsweise mittels elastischer Druckvorspannung zwischen den beiden Vorritzsägeblättern.

14. Vorritzsägeaggregat nach einem der vorhergehenden Ansprüche,
**gekennzeichnet durch** eine Steuerungsvorrichtung, welche signaltechnisch mit der Antriebsvorrichtung gekoppelt und ausgebildet ist, um ein die Schnittgeschwindigkeit eines Hauptsägeblatts charakterisierendes Signal zu erhalten und die Antriebsvorrichtung so anzusteuern, dass die Vorritzsägeblätter etwa die gleiche Schnittgeschwindigkeit haben.

15. Formatkreissäge oder Plattenkreissäge,
**gekennzeichnet durch** ein Vorritzsägeaggregat nach einem der vorhergehenden Ansprüche.

16. Formatkreissäge oder Plattenkreissäge nach dem vorhergehenden Anspruch, **dadurch gekennzeichnet, dass** das Vorritzsägeaggregat in einem Maschinengestell der Formatkreissäge bzw. Plattenkreissäge
- vorzugsweise vertikal verschieblich gelagert ist,
- zu einer ersten Seite solcherart verschwenkbar ist, dass die Drehachse des Vorritzsägeaggregat aus einer Lage, in der sie parallel zu einer Werkstückauflagefläche verläuft in eine um einen Winkel von zumindest 45° gegenüber der Werkstückauflage verschwenkte Lage kommt, und/oder
- zu einer der ersten Seite gegenüberliegenden zweiten Seite solcherart verschwenkbar ist, dass die Drehachse des Vorritzsägeaggregat aus einer Lage, in der sie parallel zu einer Werkstückauflagefläche verläuft in eine um einen Winkel von zumindest -45° gegenüber der Werkstückauflage verschwenkte Lage kommt und
vorzugsweise vertikal verschieblich gelagert ist
